# FASCICULE DE BREVET EUROPEEN

(11) **EP 3 619 079 B1**
(45) Date de publication et mention de la délivrance du brevet: **25.09.2024**
(21) Numéro de dépôt: 18727858.5
(22) Date de dépôt: 04.05.2018
(51) Int. Cl.: B60R 21/233, B60R 21/36

(54) **SYSTEME DE PROTECTION DES PERSONNES ET DES BIENS COMPRENANT UNE STRUCTURE GONFLABLE A LONGUE DUREE D'ACTION**
SCHUTZSYSTEM FÜR PERSONEN UND WAREN, UMFASSEND EINE AUFBLASBARE STRUKTUR MIT LANGER WIRKUNGSDAUER
PROTECTION SYSTEM FOR PERSONS AND GOODS COMPRISING AN INFLATABLE STRUCTURE WITH LONG DURATION OF ACTION

(30) Priorité: 05.05.2017 FR 1754011
(43) Date de publication de la demande: 11.03.2020
(73) Titulaire: Cord, Paul Philippe, 75009 Paris (FR)
(72) Inventeur: Cord, Paul Philippe, 75009 Paris (FR)
(74) Mandataire: IP Trust
(86) Numéro de dépôt international: PCT/FR2018/051138
(87) Numéro de publication internationale: WO 2018/203020

(56) Documents cités:
- EP-A1- 3 228 505
- WO-A1-01/89885
- WO-A1-03/053751
- WO-A1-2004/016478
- DE-A1- 10 062 560
- DE-C1- 10 119 351
- US-A- 6 116 644
- US-A1- 2006 175 813
- US-A1- 2008 147 278
- US-A1- 2012 267 183

## Description

### DOMAINE TECHNIQUE DE L'INVENTION

L'invention concerne un système de protection comprenant au moins une structure gonflable de sécurité associée chacune à un générateur de gaz activable par une commande extérieure

Le système de protection selon l'invention est destiné notamment, mais non exclusivement, au véhicule autonome.

### ETAT DE LA TECHNIQUE

Les systèmes de protection sont classiquement composés d'airbags associés à des générateurs de gaz actionnant leur déploiement lors de l'impact ainsi que des prétensionneurs de ceintures. Les générateurs de gaz des airbags et prétentionneurs de ceintures actuels présentent cependant des inconvénients majeurs.

En premier lieu, leur actionnement est déclenché par le choc lui-même. Le temps de détection de l'évènement et de l'activation des systèmes de protection est réduit à quelques centièmes de seconde. (1 à 2 centièmes de seconde pour la détection, 1,5 à 4 centièmes de seconde pour l'activation des systèmes de protection soit 0,06 seconde au total). Cette rapidité de mise en oeuvre des airbags et prétensionneurs peut créer des performances dégradées en terme de protection si ce n'est des blessures. En effet le déploiement rapide d'un airbag peut s'avérer dangereux pour un passager lorsque celui-ci occupe une position autre que sa position dite normale. Il peut créer ainsi de graves lésions pour les personnes par exemple trop proches du volant ou ayant un bras ou une jambe sur le tableau de bord. Les airbags sont ensuite des sacs légers réalisés classiquement en nylon et munis d'évents importants pour assurer la déflation du sac. Du fait de la présence de tels évents, ils offrent une « fenêtre » d'efficacité de quelques centièmes (1/100) de seconde, et donc limitée par conséquent au premier choc. En outre, les technologies actuelles les plus courantes ne permettant pas de dépasser 1,5 moles de volumes gazeux. Elles restent donc limitées à des temps de génération de gaz de quelques centièmes de secondes. Enfin la tension de la ceinture de sécurité n'est en effet efficace que lorsqu'elle est bien positionnée. Or, la pré-tension ne peut corriger les éventuels jeux à l'épaule créés par le passager pour des raisons de confort.

En outre, les systèmes de protection utilisés actuellement dans les véhicules sont essentiellement des systèmes pour protéger les occupants du véhicule, et non les piétons ou vélos.

Afin de pallier ces inconvénients, de nouveaux générateurs de gaz sont, par ailleurs, à l'étude pour permettre un déploiement modulé des airbags et notamment tenant compte de la masse d'inertie du passager au moyen d'informations fournies par des systèmes de détecteur d'occupation du siège. Ces systèmes de protection restent cependant à ce jour insatisfaisant dans la problématique de déploiement. Par ailleurs, l'activation des générateurs de gaz reste conditionnée par le choc lui-même.

Il a été également proposé dans les brevets EP2599669 et US8985652 des systèmes de protection pour piétons. Les systèmes proposés consistent en des airbags se déployant à l'extérieur, au niveau du pare-brise ou au niveau du pare-choc vers l'avant du véhicule. Ces systèmes de protection restent cependant également insuffisants en terme de protection du piéton. S'agissant du système se déployant au niveau du pare-brise, le déploiement de l'airbag reste conditionné par le choc du piéton avec la voiture. Il n'assure aucune protection au niveau des jambes du piéton. S'agissant du système se déployant au niveau du pare-choc, il n'assure pas la protection du piéton en cas de projection du piéton sur le capot après impact sur l'airbag. Aucune protection n'est alors assurée après le premier choc.

La demande WO03/053751 décrit également un système d'airbag disposé à l'intérieur du pare-choc avant du véhicule, et arrangé pour se déployer dans la zone située au-dessus du pare-chocs pour prévenir ou atténuer les blessures qui auraient été causées par une personne frappant la grille ou le capot du véhicule. Le système d'airbag est activé dès lors qu'un impact est prédit de manière certaine. Il n'offre cependant aucun ajustement de la réponse du système de protection entre le moment où le choc à venir a été identifié et le moment où le choc a lieu, et pendant le choc lui-même, et reste donc insatisfaisant en terme de protection du piéton. Le document US2008147278 décrit un système de protection pour véhicule selon le préambule de la revendication 1.

L'invention vise à remédier à ces problèmes en proposant un système de protection permettant d'améliorer la protection des piétons et vélos ainsi que celle des occupants d'un véhicule en cas de choc.

### OBJET DE L'INVENTION

A cet effet, et selon un premier aspect, l'invention propose un système de protection pour véhicule avec les caractéristiques de la revendication 1.

Par durée totale de gonflement, on entend la durée complète du gonflement, que la génération soit continue ou impulsionnelle.

Par étanche, on entend sans évent d'amortissement. En revanche, il peut être prévu dans la structure gonflable au moins un évent régulé par la pression (opercule) ou électroniquement par le système automatisé régulant la déflation de la structure.

Par la suite, le terme véhicule inclut le terme composant mobile.

Avantageusement, la structure gonflable est pourvue d'au moins un évent régulé par la pression ou électroniquement par le système automatisé régulant la déflation de la structure.

Avantageusement, la structure gonflable est constituée d'au moins une série de sacs prenant une forme tubulaire en position déployée, lesdits sacs étant assemblés latéralement les uns avec les autres, avantageusement au travers d'évents régulés ou non.

Avantageusement, les sacs sont assemblés selon une génératrice. Selon une configuration particulière la distance entre lesdits sacs est inférieure au diamètre desdits sacs.

Avantageusement, la structure gonflable est constituée d'au moins une série de sacs réalisés à partir de deux toiles, d'épaisseur identique ou non, et soudés selon une génératrice.

Avantageusement, la structure gonflable comporte au moins un sac de renfort prenant une forme tubulaire en position déployée, s'étendant transversalement à la série de sacs tubulaires au niveau de l'une des extrémités dudit ensemble. Selon un mode de réalisation particulier, le sac de renfort est prolongé latéralement de long de la structure gonflable.

Selon une configuration particulièrement avantageuse, la structure gonflable comporte un sac de renfort s'étendant transversalement à la série de sacs tubulaires au niveau de l'extrémité basse dudit ensemble. Ce sac peut également se prolonger latéralement le long de la structure.

Avantageusement, la structure gonflable comporte un sac de protection additionnel prenant une forme tubulaire en position déployée et s'étendant transversalement à la série de sacs tubulaires au niveau de l'extrémité haute dudit ensemble, lequel sac est configuré pour passer d'une position déployée à une position en arc de cercle. Avantageusement, le sac de protection additionnel a une épaisseur anisotrope.

Avantageusement, la structure gonflable comporte un sac de renfort additionnel prenant une forme tubulaire en position déployée, s'étendant transversalement à la série de sacs tubulaires au niveau du module de gonflage dudit ensemble.

Avantageusement, le sac de renfort et/ou le sac de protection additionnel est(sont) en communication fluidique avec l'un au moins des sacs tubulaires de la série de sacs, la communication fluidique étant assurée le cas échéant par des évents régulés.

Avantageusement, les sacs sont logés dans une matrice en tissus assurant la forme de la structure gonflable.

Avantageusement, tout ou partie des sacs ont une épaisseur anisotrope selon une génératrice.

Selon une mise en oeuvre particulière, la structure gonflable et le générateur de gaz sont conditionnés dans un module placé dans une partie avant du véhicule et sont arrangés pour que structure gonflable se déploie partiellement vers l'avant du véhicule pour éviter un contact direct de la personne avec le véhicule.

Avantageusement, le système automatisé est configuré pour que, en cas de prédiction d'un choc avec une personne extérieure au véhicule, active la pressurisation de la structure gonflable et des différents évents pour ajuster les caractéristiques de la structure gonflable aux caractéristiques du choc.

Avantageusement, le module placé dans une partie avant du véhicule est placé sur un dispositif articulé qui permet au le système automatisé de modifier son orientation, son assiette, et sa position axiale.

Selon une autre mise en oeuvre particulière, la structure gonflable est constituée de deux séries de sacs prenant une forme tubulaire en forme d'arc de cercle en position déployée, les sacs de chaque série étant assemblés latéralement et en communication fluidique les uns avec les autres, chaque série de sacs étant intégrés de part et d'autre d'un siège du véhicule et/ou d'un appui tête et comprenant des moyens d'attache réciproques. Une structure ainsi configurée est avantageusement destinée à la protection des passagers du véhicule.

Avantageusement, la structure gonflable est constituée d'une série de sacs dont les extrémités sont fixées sur le tableau de bord à une distance inférieure à sa longueur pour une protection conducteur ou passager en cas de choc frontal.

Avantageusement, la structure gonflable est réalisée en caoutchouc naturel ou de synthèse tels que le Polychlorure de Vinyle, le Polyisobutylène, Polyuéréthane, le Néoprène, le Polyéthylène , Nylon 6X6 enduit Néoprène ou Silicone, Polyuréthane.

Avantageusement, le système de protection comporte au moins un absorbeur de choc mis en oeuvre par un vérin et placé entre l'un au moins des pare-chocs du véhicule et une partie fixe du véhicule le vérin étant piloté par le système automatisé.

Avantageusement, le système de protection comporte au moins un absorbeur de choc dont la force d'absorption est piloté par le système automatisé.

Avantageusement, le système de protection comporte au moins un prétensionneur de ceinture de sécurité apte à être actionné par le système automatisé et activé sur une durée supérieure à 50 millisecondes.

Avantageusement, le système automatisé est configuré pour sélectionner une ou plusieurs structures gonflables et piloter le ou les évents équipant la ou lesdites structures, l'un au moins des absorbeurs de choc et/ou l'un au moins des prétensionneurs de ceinture de sécurité en fonction de l'information prédictive établie. Chaque structure gonflable est susceptible de se déployer selon une séquence programmée par le système automatisé.

Avantageusement, le système de protection comprend un système de blocage de sangles en partie haute des sièges couplé à des absorbeurs d'énergie dont les caractéristiques peuvent être ajustées en fonction de la morphologie du passager installé sur le siège et identifiée par le système automatisé.

Avantageusement, les différents systèmes d'activation sont reliés par fils, et préférentiellement par un système Bus qui en outre les vérifie en temps réel.

Avantageusement, le générateur de gaz comporte une première chambre contenant du propergol solide homogène ou composite, et une deuxième chambre contenant une deuxième composition constituée par un mélange d'au moins une charge oxydante et d'au moins une charge réductrice, ledit propergol solide formant un bloc dont l'épaisseur et les caractéristiques chimiques sont ajustés pour assurer une combustion complète des gaz en plus de 50 millisecondes. Avantageusement, le propergol composite présente une charge oxydante principalement constituée d'ADN (Ammonium DiNitramide), tandis que la seconde composition présente une charge oxydante contenant principalement de l'ADN. Par le terme « principalement », on entend à plus de 90% d'ADN.

Avantageusement, le générateur de gaz comporte comme seule composition de propergol homogène ou composite dont les caractéristiques balistiques sont ajustées pour assurer une combustion complète en plus de 50 millisecondes. Avantageusement, la charge oxydante du propergol composite est principalement constituée d'ADN (Ammonium DiNitramide ).

Avantageusement, le générateur de gaz comporte une seule composition constituée par un mélange d'au moins une charge oxydante et d'au moins une charge réductrice, dont la décomposition est pilotée par un dispositif énergisant configuré pour assurer une génération complète des gaz en plus de 50 millisecondes. Avantageusement, la charge oxydante contient principalement de l'ADN (Ammonium DiNitramide).

Avantageusement, des gaz comprimés peuvent être utilisés seuls ou en complément des générateurs décrits ci-dessus.

Le système de protection est destiné à être mis en oeuvre notamment mais non exclusivement avec un véhicule autonome. Le véhicule autonome présente en effet de nouvelles opportunités en terme d'anticipation d'accident pour l'éviter, mais aussi en ouvrant des possibilités de réduire la sévérité d'un accident lorsqu'il est inévitable. Avec le véhicule autonome, la possibilité d'un choc fronto-frontal peut être détecté à 150m, soit de l'ordre de 9 secondes à 60 km/h, 4,5 secondes à 120km/h avant le choc.

### BREVE DESCRIPTION DES FIGURES

D'autres objets et avantages de l'invention apparaîtront au cours de la description qui suit, faite en référence aux dessins annexés, dans lesquels :
- la figure 1 représente une vue schématique d'un véhicule comportant une structure gonflable selon un exemple de réalisation d'un système de protection piéton selon l'invention, la structure gonflable étant montrée en position déployée ;
- la figure 2 représente une vue de détail de la structure gonflable illustrée sur la figure 1 ;
- la figure 3 représente des exemples de réalisation d'une structure gonflable constituée de deux toiles assemblées;
- les figures 4a et 4b représentent un exemple d'assemblage de sacs constituant une structure gonflable « coquille » (se déployant en forme d'arc de cercle), en position respectivement non déployée et déployée ;
- la figure 5 représente une vue de sac d'une structure gonflable constituant un amortisseur ou un renforcement R de la structure gonflable illustré sur la figure 13 ;
- les figures 6 et 7 illustrent des exemples d'arrangement de sacs tubulaires pour la réalisation d'une structure gonflable « coquille » (se déployant en forme d'arc de cercle), l'un des arrangements prévoyant un tube d'épaisseur « anisotropique (par épaisseur « anisotropique », on entend une épaisseur variable selon une génératrice) (figure 6), l'autre arrangement prévoyant des plis rapprochés (figure 7). Par le jeu des évents d'alimentation, le mouvement de rotation est progressif à partir du générateur.
- les figures 8 et 9 représentent une vue de dessus en transparence d'une structure gonflable en forme respectivement rectangulaire et trapézoïdale réalisées selon l'un des arrangements de la figure 3 ;
- la figure 10 représente une vue schématique latérale d'une structure gonflable en forme incurvée réalisée par exemple selon la figure 3 mais avec deux toiles d'épaisseur différentes ;
- la figure 11 représente une vue de dessus d'une structure gonflable ;
- Les figures 12a et 12b représentent la structure gonflable de les figures 11 et 2 misent en oeuvre avec un véhicule pour la protection d'un piéton, la structure étant représentée respectivement en position déployée a et b en position refermée par activation du sac B illustré sur la figure 11:
- la figure 13 représente une vue de dessus d'une structure gonflable selon une autre configuration : la structure gonflable est constituée de 4 parties indépendantes les parties A' et A" sensiblement identiques à la partie A de la figure 11, la structure B' identique à la structure B de la figure 11, et une structure R pour rigidifier la structure gonflable.
- la figure 14 représente le module dans lequel le générateur et la structure gonflable sont logés : le générateur est au centre de la structure gonflable, les deux parties de la structure sont repliées et enroulées de façon que chaque partie se déploie indépendamment. ;
- les figures 15a et 15b représentent une vue respectivement de côté et avant d'un siège de véhicule équipé d'une structure gonflable selon un autre exemple de réalisation du système de protection selon l'invention ;
- la figure 16 représente une vue de détail de la structure gonflable des figures 15a et 15b.

Pour plus de clarté, les éléments identiques ou similaires des différents modes de réalisation sont repérés par des signes de référence identiques sur l'ensemble des figures.

### DESCRIPTION DETAILLEE DES FIGURES

En relation avec les figures qui suivent, il est décrit un système de protection destiné à équiper un véhicule comprenant des équipements de protection comportant au moins une structure gonflable de sécurité, chaque structure étant associée respectivement à au moins un générateur de gaz Le système de protection comporte un système automatisé commandant le déploiement de la ou des structure(s) gonflable(s) par activation du ou des générateurs de gaz associé(s), ainsi que le déploiement d'autres équipement de protection dont le véhicule est équipé. Seules les structures gonflables, équipant le véhicule ou l'une de ses parties, sont illustrées.

### Système automatisé commandant les structures gonflables et autres équipements de protection

Le système automatisé est chargé des fonctions critiques de sécurité du véhicule équipé des systèmes de protection, lesquelles, fonctions critiques de sécurité, correspondent à une information prédictive d'un choc en temps et nature de l'obstacle.

Plus particulièrement, le système automatisé comprend des moyens d'analyse d'informations en provenance du système de pilotage automatique du véhicule ou du système d'aide à la conduite et relatives au véhicule d'une part et à l'environnement du véhicule d'autre part pour établir la prédiction ou non d'un choc en temps et nature de l'obstacle. L'ensemble des informations reçues par le véhicule sont les informations extérieures au véhicule, telles que la position et la vitesse de l'ensemble des véhicules impliqués, la position des personnes ou des obstacles etc., et les informations relatives aux occupants du véhicule comme la position et la corpulence de chaque passager, la présence d'un enfant, d'un bébé dans une chaise, etc.

Le système automatisé comporte en outre une unité de commande qui, à partir des informations reçues et analysées, active, lorsque la prédiction d'un choc est établie en temps et nature de l'obstacle, la ou les structures gonflables et autres équipements de protection adéquats qui permettront de minimiser les effets du choc sur les personnes. La réception et l'analyse des informations du véhicule et celles de son environnement sont effectuées en continu. Le système automatisé ajuste la réponse du système de protection à partir des informations reçues avant et pendant le choc en pilotant, grâce à son Intelligence Artificielle, l'activation dans l'espace et dans le temps (spatio-temporel) d'un seul ou d'une combinaison de plusieurs équipements de protection dont le véhicule est équipé. Ainsi, grâce à l'analyse de l'ensemble des informations reçues avant et pendant un événement critique par les différents capteurs du système de pilotage du véhicule autonome ou du système d'aide à la conduite d'un système mobile, le système automatisé adapte une réponse spécifique à chaque configuration d'accident.

En fonction des informations relevées et analysées lesquelles caractérisent l'information dite prédictive, le système automatisé pilote l'activation de l'un ou d'une combinaison des éléments de protection dont le véhicule est équipé choisis parmi une structure gonflable constituant une protection pour les piétons et vélos, une structure gonflable équipant les sièges du véhicule (siège du passager, siège pour enfant ou bébé), des structures gonflables frontales, latérales, un ou plusieurs prétensionneurs de ceinture, un amortisseur de choc avant, un absorbeur de choc arrière. Des exemples d'éléments de protection seront présentés plus loin.

Le système automatisé intervient en aval des systèmes de localisation et d'analyse du système de base qui, lorsqu'un événement indésirable va se produire dans un délai de quelques secondes ou quelques fractions de secondes, et après avoir pris toutes les décisions d'évitement, d'arrêt d'urgence, procède à l'activation des systèmes de protection. Il peut être prévu également que le système automatisé déclenche également préalablement une manoeuvre pour optimiser les performances des systèmes de protection.

Le système automatisé peut par exemple, selon un mode de réalisation particulièrement avantageux, intervenir sur la trajectoire du véhicule ou la direction du module protection piéton pour optimiser la configuration du choc. Ce sera le cas notamment lorsque le véhicule concerné est une moto pour laquelle une position perpendiculaire à l'obstacle permet à la structure gonflable frontale d'être pleinement efficace.

Avantageusement, le système automatisé garantit le port permanent de la ceinture de sécurité de tous les passagers. Il peut être ainsi prévu que le véhicule ne puisse pas démarrer ou du moins rouler lorsqu'il est détecté que tous les occupants du véhicule ne sont pas attachés.

Avantageusement, les différents systèmes d'activation sont reliés par fils, et préférentiellement un système Bus qui en outre les vérifie en temps réel. Avantageusement, un logigramme spécifique à chaque véhicule permet d'optimiser les différents équipements de protection (structure gonflable ou autres).

### Structures gonflables

Les structures gonflables mises en oeuvres comprennent des sacs étanches, assemblés entre eux et communiquant les uns avec les autres par des évents régulés. Les pertes thermiques et gazeuses durant toutes les phases opérationnelles sont ainsi limitées, tandis que les effluents et les éventuelles poussières sont retenus dans le sac. Il peut être prévu également d'adjoindre aux sacs des additifs (hopcalite, talc, oxyde de Zinc, etc.) afin de traiter les effluents retenus dans ces derniers. Par « adjoindre des additifs aux sacs », on entend des additifs contenus dans la structure même du sac ou disposés à l'intérieur de ce dernier. Les évents régulés peuvent revêtir différentes formes. Ils peuvent être soit automatiques, comme par exemple des trous calibrés, un opercule ou similaire s'ouvrant à une pression prédéterminée, soit commandés, comme par exemple une membrane soumise à un dispositif pyrotechnique, une vanne ou similaires. Selon un autre mode de réalisation particulier, les évents peuvent être remplacés par des générateurs de gaz indépendants. Avantageusement, les évents entre les différents sacs gonflables peuvent être munis d'un dispositif anti retour.

Suivant la mise en oeuvre à laquelle la structure gonflable est destinée, il est privilégié une structure gonflable formée d'une pluralité de sacs assemblés latéralement entre eux et en communication fluidique entre eux par des évents régulés, lesdits sacs prenant une forme tubulaire en position déployée par activation du ou des générateur(s) de gaz associé(s) à la structure gonflable. Selon une configuration particulière et avantageuse, les_sacs forment en position déployée des tubes de 3 à 6 cm de diamètre avec une longueur adaptée,, la distance entre deux tubes successifs étant inférieure à leur rayon. Ils sont mis en pression de préférence sous 0,12 à 0,20 MPA absolu selon les besoins, et préférentiellement sous 0,14+/- 0,02 MPA absolu. Dans les versions décrites plus loin, du fait de durées de gonflage « longues », jusqu'à dix fois plus longues que celle des technologies courantes, les matériaux des sacs peuvent être relativement épais. Ils peuvent être réalisés en PVC (Polychlorure de Vinyle) ou tout autres matériaux du type de ceux utilisés pour la réalisation de canots pneumatiques de type Zodiac^{®}. D'autres matériaux sont possibles, comme par exemple le nylon 6x6, enduit néoprène ou silicone, ou le polyuréthane. Selon une configuration particulière, les structures gonflables comportent une matrice réalisée en tissu à l'intérieur de laquelle les sacs tubulaires sont disposés. La matrice est arrangée pour définir la forme de la structure gonflable. La matrice en tissu s'ajuste aux besoins de protection mécanique des sacs et des formes recherchées. Selon cette configuration, les sacs sont avantageusement réalisés en nylon 6x6, enduit néoprène ou silicone, ou en polyuréthane.

Chaque sac tubulaire est relié avec les sacs directement adjacents par une bande de tissu, avantageusement de même matériau que les sacs tubulaires. Selon un exemple de réalisation particulier, pour des sacs tubulaires de 6 centimètres, les bandes de tissu présentent une largeur de 4 centimètre. Les bandes de tissu définissent des zones de jonction 5.

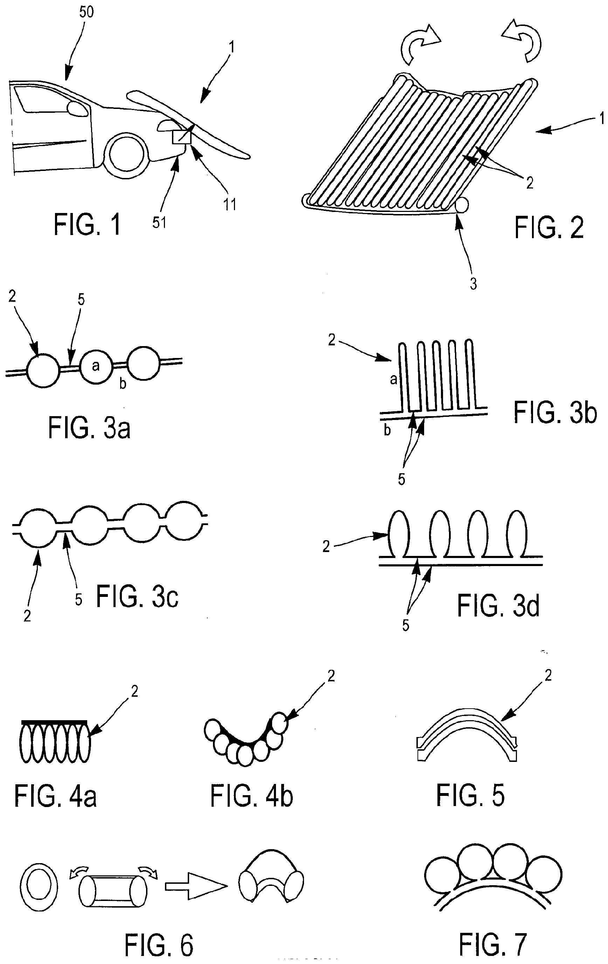

Les structures gonflables sont réalisées avantageusement à partir de deux bandes de tissu superposées, de préférence de même matériau, fixées entre elles. La figure 3 montre des exemples de réalisation d'une structure multitubulaire. Les sacs tubulaires sont préformés soit par les deux bandes de tissus (figures 4a, 4c), soit par une seule des bandes. Les bandes peuvent être distribuées de manière symétrique ou dissymétrique. Dans ce dernier cas, la distance entre deux plis sera égale au diamètre du tube augmentée de la distance entre les tubes. Dans le cas de tube de 6 cm de diamètre et de zones de jonction de 4 cm, la distance entre deux plis sera de 10 cm.

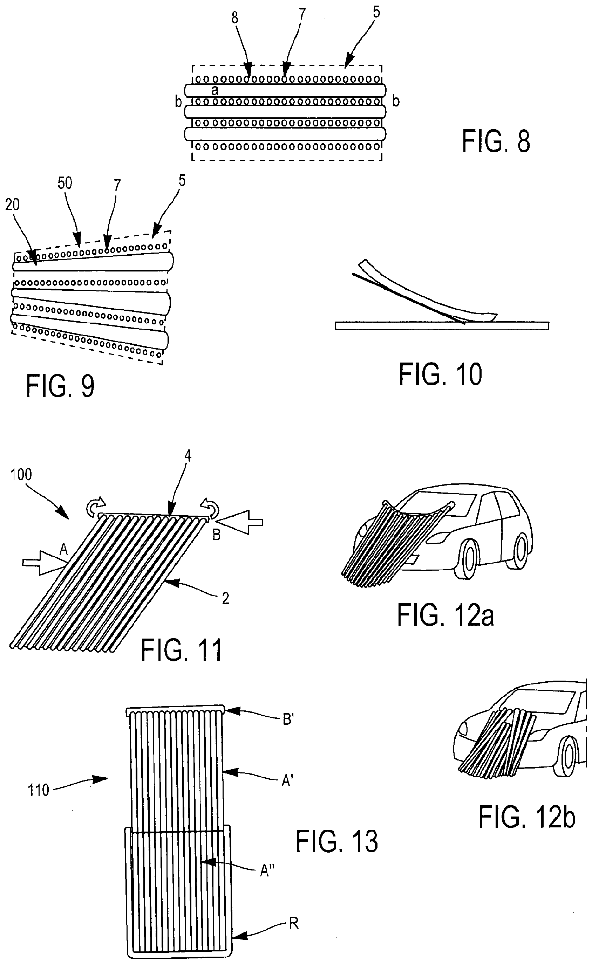

Avantageusement, les deux bandes de tissus sont soudées ou collées entre elles au niveau des zones de jonction. La soudure 7 ou le collage est réalisé(e) avantageusement de manière discontinue au niveau de chacune des zones de jonction 5, de sorte à créer une communication transversale des sacs entre eux (évents 8) et assurer ainsi une répartition des gaz lors du gonflage et ainsi l'équilibre des pressions (figure 8).

Dans ce qui précède, les zones de jonction 5 et les sacs tubulaires2 présentent respectivement une largueur et un diamètre constants. La structure gonflable présente ainsi une forme sensiblement plane et rectangulaire. Selon les besoins, il peut être prévu avantageusement une structure gonflable de forme trapézoïdale comme illustré sur la figure 9. Pour ce faire, la structure gonflable comprend des zones de jonction 50 présentant une largeur croissante et des sacs tubulaires 20 présentant une épaisseur anisotropique (épaisseur variable selon une génératrice). Il peut être également prévu avantageusement une structure gonflable présentant une forme incurvée comme illustré sur la figure 10. Dans ce cas, la toile supérieure de la structure gonflable présente une rigidité supérieure à celle de la toile inférieure. On comprend que selon les besoins de forme ou de courbure, on jouera sur l'épaisseur des tubes, les largeurs des zones de jonction et le type de toiles mis en oeuvre.

Avantageusement, ces configurations peuvent être mises en oeuvre que la structure soit constituée seulement de sacs tubulaires communiquant entre eux ou d'une matrice textile mise en forme par les sacs tubulaires disposés à l'intérieur de celle-ci.

Selon la protection à laquelle les structures gonflables sont destinées, celles-ci pourront présenter un arrangement plat du type rideau dont un exemple est illustré sur la figure 2 ou en coquille du type de celui illustré sur les figures 9, 12 et 15.

L'arrangement « plat » sera privilégié pour la protection des piétons ou la protection latérale. L'arrangement « en coquille » sera privilégié pour la protection des occupants du véhicule 50 ou pour des amortisseurs. Il est bien entendu évident cependant que les arrangements plats ou en coquille pourront être mis en oeuvre indifféremment pour l'une ou l'autre des protections. La figure 12 illustre d'ailleurs un arrangement en coquille destiné à la protection des piétons.

L'arrangement en coquille est obtenu via l'assemblage de tubes selon une génératrice, avec une distance entre les tubes inférieure au diamètre (figures 4a, 4b, 7). Lors du gonflage des sacs, compte tenu de leur assemblage et leur arrangement des uns par rapport aux autres, les sacs s'incurvent. L'arrangement « en coquille » peut être obtenu également en prévoyant une variation d'épaisseur selon une génératrice (épaisseur anisotropique) (figure 6). De même que précédemment, les sacs, lors de leur mise sous pression, s'incurvent. Selon une autre mise en oeuvre illustrée sur la figure 5, il peut être prévu également de bloquer les sacs tubulaires sur une distance inférieure à leur longueur de sorte qu'ils se déploient en arc de cercle. Un tel arrangement sera mis en oeuvre avantageusement pour former des amortisseurs ou pour renforcer le sac piéton.

Les figures 1 et 2 illustrent un exemple de structure gonflable 1 mis en oeuvre pour la protection des piétons et vélos.

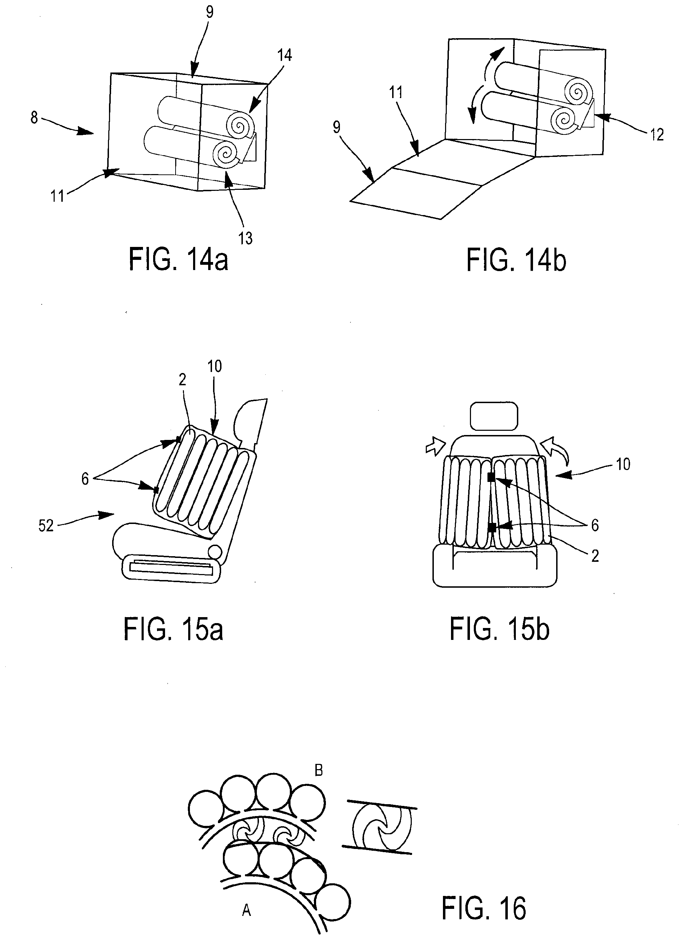

La structure gonflable 1 et le générateur de gaz 11 associé sont avantageusement placés à l'avant du véhicule 50. Dans l'exemple illustré sur la figure 1, les deux pièces sont placées dans un module situé au niveau du pare-choc 51 du véhicule 50. Ils pourraient être également placés au niveau de la calandre. Le module, illustré sur la figure 14, sera décrit plus loin en lien avec une autre configuration de la structure gonflable. Quelle que soit la configuration, les deux pièces sont arrangées pour que, en cas de prédiction de choc par le système automatisé, la structure gonflable 1 se déploie vers l'avant du véhicule 50 et sur tout ou partie du pare-choc comme illustré sur la figure 1. Ainsi, la structure gonflable 1, en position déployée, comprend une partie s'étendant au-delà du véhicule 50, vers l'avant de ce dernier et une deuxième partie recouvrant la calandre et s'étendant au-dessus du capot. La partie avant avance avantageusement d'un mètre à +/- 0,5 mètre au devant du véhicule 50 pour que le premier impact du piéton avec le véhicule s'effectue sur la structure gonflable 1. Dans la configuration illustrée, la structure gonflable 1 est dimensionnée pour s'étendre sur une moitié seulement du capot. Il peut bien entendu être prévu des dimensionnements différents, en particulier un dimensionnement tel que la deuxième partie s'étende jusqu'au pare-brise du véhicule 50 sans sortir du cadre de l'invention. Ainsi le choc piéton ne se fait pas en position verticale avec le véhicule 50 mais avec un angle. Cela permet d'atténuer ainsi fortement l'impact sur la calandre du véhicule 50.

Avantageusement, la structure gonflable 1 pour protéger les piétons et les vélos, est constituée d'une série de sacs 2 assemblés latéralement et en en communication fluidique les uns avec les autres. La figure 2 montre un exemple d'une telle structure gonflable 1, les sacs 2 la constituant étant respectivement en position déployée.

Dans le mode de réalisation illustré, la structure gonflable 1 est un sac en PVC ayant des dimensions de 2,2 m x1,4 m. Elle est constitué de 16 sacs 2 aptes à prendre respectivement en position déployée une forme tubulaire. Chaque sac, gonflé à une pression de 0,15 MPA, présente en position déployée un diamètre de 6 cm, une longueur de 2,20 m. Les sacs 2 sont séparés les uns des autres de 3 cm en moyenne.

La structure comporte en outre un sac complémentaire dit sac de renfort 3 s'étendant transversalement à l'ensemble de sacs 2 tubulaires juxtaposés, en partie basse, également désignée de partie avant dudit ensemble en référence avec son positionnement par rapport au véhicule 50 lorsque la structure gonflable 1 est déployée. Le sac de renfort est en communication fluidique avec l'un au moins des sacs 2 tubulaires juxtaposés de l'ensemble. Solidaire de la série de sacs 2 fixés côte à côte, le sac de renfort à pour fonction de renforcer la partie avant de la structure gonflable 1. Selon un exemple de réalisation donné, le sac de renfort 3 présente en position déployée une forme tubulaire ayant un diamètre de 6 cm et une longueur de 1,4 m.

Il peut être prévu également un sac de protection additionnel s'étendant transversalement à l'ensemble de sacs 2 tubulaires juxtaposés, en partie haute de ce dernier (figure 11). Selon un exemple de réalisation donné, le sac de protection additionnel présente en position déployée une forme tubulaire ayant des dimensions identiques à celles du sac de renfort 3, soit un diamètre de 6 cm, une longueur de 1,4 m. avec une épaisseur variable selon une génératrice : double contre le sac, simple coté externe. Le sac additionnel placé en partie haute a pour fonction de « refermer » l'ensemble de protection constitué de la série de sacs 2. Pour ce faire, le sac additionnel présente une épaisseur anisotropique de sorte à s'incurver lors de sa mise en pression et ainsi assurer la fonction de coquille pour maintenir le piéton sur le véhicule. Le sac additionnel est gonflé soit au travers d'orifices calibrés à partir de la série de sacs 2, soit par un générateur de gaz indépendant piloté par le système automatisé ou par un autre dispositif.

Bien que non représenté, il peut être prévu également un sac de additionnel autour du générateur de gaz placé dans un module au milieu de la structure gonflable et s'étendant transversalement à l'ensemble de sacs 2 tubulaires juxtaposés,

Le générateur de gaz 11 avantageusement mis en oeuvre avec la structure gonflable 1 pour la protection piéton, présente les caractéristiques définies dans le tableau qui suit.

| | |
|---|---|
| Chargement primaire | Double base 1133 masse 8g |
| Chargement secondaire | Mélange 18 NA + 4g NiGu en prills |
| Durée de fonctionnement | 300 ms |

Par prills, on entend une composition pulvérulente assemblée en grains poreux. Le prills est obtenu par une trempe d'un mélange à l'état gazeux ou évaporation rapide d'un mélange liquide.

Comme on l'aura compris, le déploiement est réalisé avant l'impact du choc. A titre illustratif, à 35 km/h, la structure gonflable 1 n'a besoin d'être activée que de 5 mètres (soit 0,5 seconde) avant l'impact. Cette prise en charge du déploiement de la structure gonflable 1 est effectuée par le système automatisé avec lequel la position relative de la voiture par rapport au piéton, cycliste ou tout autre obstacle a été déterminée.

Les figures 11 et 12 illustrent un autre exemple de structure gonflable 10A mis en oeuvre pour la protection des piétons et vélos.

La structure gonflable 100 comprend une structure principale A, avantageusement de dimension 140X 220 cm, formée de plusieurs sacs de forme tubulaire, dans l'exemple 14 sacs et une structure gonflable mono-tubulaire B, s'étendant transversalement à l'ensemble des sacs tubulaires 2 de la structure principale, en partie haute de celle-ci. Avantageusement les sacs de la structure principale A ont une longueur de 220 cm et un diamètre de 6 cm tandis que le sac constituant la structure B a une longueur de 140 cm et un diamètre de 6 cm.

Les sacs tubulaires de la structure principale A sont assemblés entre eux latéralement par une zone de jonction constitutive de leur matériau avantageusement de 4 cm. Comme décrit précédemment, la structure principale A est réalisée à partir de deux toiles formée et soudées entre elles de manière à former les zones de jonction reliant les sacs entre eux pourvues d'évents permettant une communication fluidique transversale entre les sacs tubulaires.

La structure gonflable mono-tubulaire transversale B, placé en partie haute de la structure gonflable 10A, a pour fonction de « refermer » l'ensemble de protection constitué de la série de sacs 2 comme illustré sur la figure 11. Pour ce faire, le sac additionnel présente une épaisseur variable (épaisseur anisotropique) de sorte à s'incurver circulairement sous une pression relative interne de 1,4 +/-0,2 Pa absolu et ainsi assurer la fonction de coquille pour maintenir le piéton sur le véhicule. Le sac additionnel est avantageusement en communication fluidique avec l'un au moins des sacs tubulaire du corps principal de la structure gonflable. Il peut également, selon une autre configuration, être associé à un générateur de gaz indépendant piloté par le système automatisé ou par un autre dispositif.

Il peut être prévu en outre un sac transversal, en interface générateur/sac, pour favoriser la répartition des gaz entre les sacs d'une part et rigidifier la structure latéralement d'autre part.

La structure gonflable 100 et le générateur de gaz 11 associé sont avantageusement logés, comme dans l'exemple précédemment décrit, à l'avant du véhicule 50, dans un module 8 situé au niveau du pare-choc 51 du véhicule 50 (figure 14). Le module 8, de forme parallélépipède rectangle, présente une paroi supérieure 9 solidaire d'une paroi latérale 11 pouvant se déployer vers l'avant pour former une ouverture de passage de la structure gonflable lors de son déploiement comme illustré sur la figure 14b. Les parois supérieure et latérale 9, 11 constituent, lorsqu'elles sont ouvertes, une plateforme apte à donner l'inclinaison de la partie avant de la structure gonflable. Le module est avantageusement situé au niveau du pare-choc et présente une paroi inférieure à 0,5 m du sol.

La structure gonflable est fixée sur une platine 12 du module, elle même solidaire du véhicule. Cette platine 12 contribue à donner l'inclinaison initiale (assiette) de la structure gonflable qui est, dans cet exemple de réalisation, de 30° par rapport au sol. La structure gonflable est disposée dans le module repliée en deux enroulements hélicoïdaux 13, 14 (langue de belle mère), l'un des enroulements 13 étant destiné à se déployer vers l'avant guidé par la platine 12 et la plateforme créée à l'ouverture du module, l'autre enroulement 14 étant destiné à se déployer en hauteur vers le capot.

Avantageusement, il peut être prévu une articulation de la platine 12 pour ajuster l'assiette et même d'orientation de la structure gonflable, et le cas échéant, un vérin pour déplacer le module vers l'avant. La présence d'un tel vérin s'avère particulièrement pertinent dans les cas où l'avant du véhicule est vertical comme par exemple les camions, les bus, les tramways, et autres.

Dans l'exemple décrit, le générateur de gaz est arrangé pour alimenter quatre des sacs de la structure A, de préférence les sacs disposés centralement, les autres sacs étant alimentés par l'intermédiaire des communications prévues entre les sacs, la pressurisation de ces quatre sacs assurant le déploiement de la structure axialement puis progressivement latéralement par la communication entre sacs.

Le déploiement complet de la structure gonflable B est assuré lorsque le piéton prend position sur la structure principale (figure 12a). La structure gonflable B quant à elle se referme une fois le piéton reçu par la structure A, encerclant le piéton (figure 12b) de sorte à contenir la poussée axiale de ce dernier. Le déclenchement peut intervenir à titre d'exemple par une temporisation par rapport au déclenchement initial, soit par la variation de pression due à la pression du piéton sur la structure gonflable, soit par le système de vision du système automatisé.

La cinématique du piéton est la suivante.

Lorsqu'il identifie l'impact avec le piéton comme étant certain, le système automatisé donne l'ordre de gonfler la structure A pour qu'elle soit opérationnelle lorsque le piéton est à 1 m du véhicule, le module étant positionné à 0,5m du sol, le sac est incliné à 30° par rapport à l'axe de déplacement du véhicule, le freinage d'urgence étant par ailleurs déjà actif. Selon les cas et les disponibilités, le système automatisé aura cependant la possibilité de modifier l'assiette et la direction de la structure gonflable. Par ailleurs, dans le cas de véhicule ayant une face avant verticale, il sera procéder à l'avancement du module par un vérin prévu à cet effet.

Lorsque la vitesse au moment de l'impact est de 35km/h, le temps de mise en oeuvre de la structure gonflable est de 300ms ce qui correspond à 3m de distance parcourue par le véhicule. L'ordre est donc donné par le système automatisé lorsque le piéton est à 4m du véhicule. Lors de l'impact, le piéton bascule sur la structure gonflable et sa tête est en contact à 150-200ms après l'impact. La structure B est alors déployée. Le temps d'arrêt du véhicule est de l'ordre d'une seconde. La structure gonflable A présente une rugosité suffisante qui, couplée avec la structure B, consomme le différentiel de vitesse Véhicule/piéton et maintient du piéton sur le capot du véhicule.

La figure 13 illustre un autre exemple de structure gonflable 110 mise en oeuvre pour la protection des piétons et vélos. Dans cet exemple, la structure gonflable comporte trois structures : deux structures principales, désignées A' et A", identiques à la structure A de la structure gonflable 100 avec des dimensions pour A' et A" de 110x140cm, et une structure, désignée B', est identique à la structure B de la structure gonflable 100.

Un sac R gonflable en U complète la structure A". Ce sac donne par pressurisation une plus grande rigidité à la structure A". Elle peut être pressurisée à partir des autres sacs ou de façon autonome. Avantageusement, un même générateur de gaz est utilisé. La rigidité apportée par le sac en U de A" permet de prendre en charge des personnes au sol. Elle peut être systématiquement engagée, ou non.

Comme dans l'exemple précédent, les structures A' et A" peuvent être anisotropiques pour obtenir une structure gonflable de forme courbe. La surface supérieure des structures A' et A" peuvent également être renforcée par rapport à la surface inférieure, les renforts mis en oeuvre pouvant être modulé pour privilégier certaines zones. De même, les structures A' et A" peuvent être configurées pour définir une structure gonflable de forme trapézoïdale.

Un évent régulé électroniquement isole la structure A' de la structure A". La structure C est gonflée en premier lieu via le générateur de gaz puis, lorsque la pression nominale est atteinte, l'évent régulé s'ouvre, permettant ainsi le gonflement de la structure A". L'ouverture de l'évent peut intervenir soit par une temporisation par rapport au déclenchement initial, soit par l'atteinte d'un seuil de pression prédéterminé, soit par le système de vision du système automatisé.

La séquence de gonflage de la structure A" dure 150ms. Le gonflage de la structure A' puis de la structure B' est ensuite identique au cas précédent, la structure B' étant mise en oeuvre 200ms après l'impact. En d'autres termes, lorsque la vitesse à l'impact est de 35km/h, le temps de gonflage de la structure gonflable A" est de 150 ms ce qui correspond à 1,5m de distance parcourue par le véhicule, l'ordre d'activation du générateur de gaz est donné lorsque le piéton est à 2,5 m du véhicule. Cette configuration permet donc une décision d'activation du système lorsque le piéton est à 2,5m (250ms) du véhicule contre 4m (400ms) dans le cas précédent. Il est à noter que si la vitesse du véhicule est de 50km/h, l'activation de la pressurisation est déclenchée à 6m dans l'exemple précédent et 3,5m dans le présent exemple.

En fonction des vitesses relatives des véhicules et de leurs positions, le système automatisé peut activer également des structures gonflables à l'intérieur du véhicule.

Les figures 15a et 15b montrent un exemple de structure gonflable 10 mise en oeuvre pour la protection des occupants d'un véhicule. Pour ce faire, la structure gonflable 10 et le générateur de gaz (non représenté) sont intégrés au siège 52. Le siège 52 peut être un siège propre au véhicule 50 ou un siège rapporté tel qu'un siège d'enfant.

Dans le mode de réalisation illustré, la structure gonflable 10 est constituée de deux séries de sacs 2 prenant respectivement une forme d'arc de cercle en position déployée. Comme pour la structure gonflable 10 de protection pour piéton, les sacs 2 de chaque série sont assemblés latéralement et en communication fluidique les uns avec les autres. Chaque série de sacs 2, disposée de part et d'autre du dossier du siège 52, comporte des moyens d'attache réciproques 6, comme par exemple des aimants associés à des crochets (figure 16) ou autres, pour permettre de solidariser les deux séries de sacs 2 l'une avec l'autre lorsque la structure gonflable 10 est en position déployée. Selon un exemple de réalisation donné, les sacs 2 présentent en position déployée une forme tubulaire ayant un diamètre de 6 cm et une longueur de 1,2 m. Les volumes nécessaires sont de l'ordre de 10 litres. Les générateurs peuvent être constitués de propergol seul.

Les sacs 2 des deux séries sont arrangés au niveau d'un siège 52 du véhicule 50 pour se déployer l'un par rapport à l'autre de sorte à former une enveloppe de protection en forme d'arc s'étendant autour du passager assis sur le siège 52. Ils définissent ainsi une protection de type rideau. Par le jeu de l'épaisseur ou de la distance entre tubes, la forme de l'arc peut être ajustée au besoin.

Selon un exemple de réalisation particulier, chaque série de sacs comporte dix sacs de diamètre de 6 cm et de longueur 60 cm. Chaque série est réalisée selon les exemples illustrés sur les figures 3b et 3d: elles sont formées de deux bandes de tissus assemblées entre elles de manière discontinue pour constituer les évents assurant la communication fluidique, l'une des bandes de tissus préformant des sacs suffisamment proches pour se développer en arc de cercle lors de la mise sous pression, les évents entre sacs assurant un gonflement progressif des sacs successifs pour plaquer la structure gonflable sur le passager. Avantageusement, un seul générateur assure la pressurisation des deux structures.

Afin de permettre l'accroche des séries entre elles, une temporisation dans leur déploiement est prévue. Ainsi l'une des séries se déploie en premier (de préférence la série la plus proche du passager) avec un décalage de quelques dizaines de ms par rapport à l'autre série.

Une surface d'accrochage (par exemple des aimants associés à des crochets comme illustré sur la figure 16) va se déployer sur les sacs de l'une des séries tandis que sur l'autres série, la surface d'accrochage correspondante sera ménagée sur la face interne. Par face interne, on entend la face orientée vers le passager protégé par la structure gonflable.

Le générateur de gaz avantageusement mis en oeuvre avec une telle structure gonflable présente avantageusement les caractéristiques définies dans le tableau qui suit.

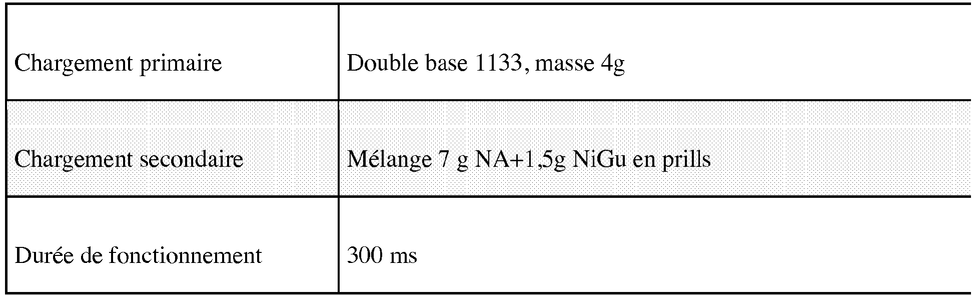

Il peut être prévu également d'augmenter le volume des sacs en partie haute pour créer une minerve pour le passager. Les sacs peuvent ainsi par exemple présenter en extrémité supérieure une forme de lobe. Il peut être prévu également d'installer un ou deux sacs supplémentaires pour ce même effet. Il peut être prévu également de porter la structure gonflable de 60 à 80 ou 120 cm pour prendre en charge la tête du passager.

Selon une autre configuration, il peut être également prévu une second structure gonflable, identique à la précédente, disposée pour se déployer en partie haute (éventuellement sur l'appui tête) de sorte à prendre en charge le haut du thorax et la tête.

La durée de pressurisation peut être aussi réduite selon les besoins.

Des structures gonflables analogues peuvent être également prévues pour protéger les occupants d'un véhicule telles que les airbags dits rideau, les airbags frontaux gonflables. L'avantage de les pressuriser avec des générateurs temps long est de permettre un déploiement non agressif, la durée de gonflage et donc l'efficacité pouvant être portées à plusieurs secondes.

Plus particulièrement, les airbags rideau protègent les passagers en cas de choc latéral. Le système automatisé permet d'anticiper sur le choc. Selon une configuration avantageuse, la structure gonflable rideau, de dimension de 70X 140 cm, comporte sept sacs de forme tubulaire de longueur 140cm et de diamètre 6cm. Les tubes sont assemblés par une zone de jonction de 4cm constitutive de leur matériau. Le mode d'élaboration est identique celui de la structure gonflable mise en oeuvre pour la protection piéton.

A titre d'exemple, pour une durée de mise en oeuvre de 300 ms, le générateur de gaz présente les caractéristiques suivantes :

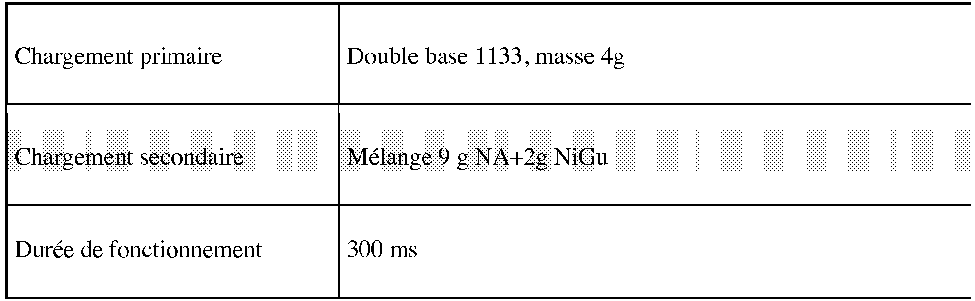

Un tel générateur assure ainsi une durée d'efficacité de la structure gonflable de l'ordre de deux secondes.

Le gonflage temps long des airbags frontaux ayant un volume de 60 l et 110l dans leur forme courante, évite ou limite fortement les risques pour les personne "hors position" (trop près, trop loin du sac gonflable). Le déploiement progressif limite en effet l'agressivité du sac gonflable. En outre, étant étanche, sa fenêtre d'efficacité est très large pour les passagers loin du sac gonflable. Il permet d'utiliser tous les types de matériaux cités plus haut. Ses évents pilotés par le système automatisé optimisent la déflation en fonction de la position, de la morphologie des personnes et aussi de la cinématique du véhicule.

En cas d'activation de l'amortisseur frontal, le sac est déployé au premier contact avec l'obstacle pour assurer le couplage passager/véhicule, la déflation n'intervient que lorsque le véhicule est immobilisé.

Il peut être prévu également une structure gonflable pour une configuration passager avant. La structure gonflable bloquée aux deux extrémités sur une distance inférieure à sa longueur va s'incurver et offrir un amortisseur du choc. Selon une configuration avantageuse, la structure gonflable pour passager avant est constituée de cinq sacs de forme tubulaire, de diamètre de 6 cm et de longueur de 1,2 m, les sacs étant espacés les uns des autres de 4 cm et bloqués sur une longueur de 80 cm. La structure gonflable va former par gonflage un arc de rayon 40cm. Par rapport à un sac passager de 110l, le volume des sacs est de 13 litres soit une masse de matière active 10 fois inférieure aux solutions courantes.

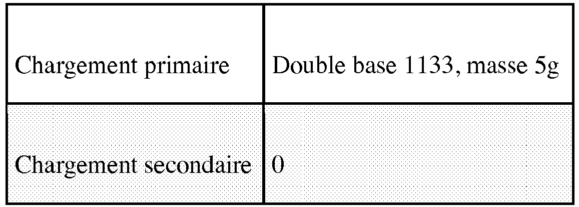

Une structure gonflable avec matrice textile à large maille contenant les sacs est particulièrement adaptée pour cette application. Cela permet en effet de limiter l'effet de souffle. Par large maille, on entend une maille de 1 à 10 mm.

Cette structure gonflable est avantageusement adaptée pour les deux places avant du véhicule si le volant a été supprimé, et adaptée au volant s'il est maintenu.

Il peut être également prévu, en remplacement les deux séries de sacs 2 disposées de part et d'autre du dossier du siège, d'un seul sac apte à rendre une forme tubulaire intégré d'un côté du siège de sorte à faire rempart latéralement en cas de choc latéral.

Bien que les airsbags sièges devraient protéger un enfant dans un siège enfant, il peut être prévu également dans le cas de la protection des enfants, en remplacement des deux séries de sacs 2 disposées de part et d'autre du dossier du siège, d'une ceinture ventrale ou d'une tablette gonflable.

Afin d'améliorer la protection des occupants du véhicule 50, il peut être prévu que le système de protection comprenne un système de blocage de sangles en partie haute des sièges couplé à des absorbeurs d'énergie dont les caractéristiques peuvent être ajustées par le système automatisé en fonction de la morphologie du passager installé sur le siège et identifiée par ce système.

Avantageusement, en complément d'une structure gonflable 10 intégrée, le siège est configuré pour pouvoir se déplacer axialement de sorte à contribuer à l'absorption d'un choc frontal ou arrière.

D'autres éléments de protection peuvent être également prévus.

Dans le cas de la protection des occupants du véhicule 50 en cas de choc frontal, deux types de protection sont prévus selon que le volant est maintenu ou non.

Lorsque le volant est maintenu, la structure gonflable est un sac étanche de 60 litres, de forme classique, en Nylon ou de type Zodiac par exemple, des évents régulés par la pression (opercule) ou électroniquement par le système automatisé régulant la déflation du sac lors de décélération de l'occupant lorsque le véhicule est immobilisé.

Cette régulation de l'évent piloté est particulièrement pertinente lorsque le véhicule utilise ses absorbeurs de chocs pour réduire la vitesse d'impact, l'occupant bénéficie de la décélération correspondante, pour ensuite utiliser la déflation du sac lorsque le véhicule est immobilisé.

Lorsque le volant n'est pas maintenu, il peut être prévu une structure gonflable constituée de 6 sacs 2 de forme tubulaire, de diamètre de 6 cm et de longueur 1,2 m, espacés les uns des autres de 3 cm, et disposé au niveau du tableau de bord. Les caractéristiques du générateur de gaz mis en oeuvre sont préférentiellement celles indiquées dans le tableau ci-dessous.

| | |
|---|---|
| Chargement primaire | Double base 1133, masse 3g |
| Chargement secondaire | Mélange 6 g NA+1g NiGu en prills |

Alternativement, il peut être prévu, en remplacement de la structure gonflable constituée de 6 sacs 2, deux structures gonflables, l'un côté conducteur, l'autre côté passager, bloqués sur une distance inférieure à sa longueur de sorte qu'ils se déploient en arc de cercle lors de l'activation du générateur associé. Selon un exemple de réalisation, chaque structure gonflable est constituée de 6 sacs 2 tubulaires de diamètre 6 cm de longueur 0,6 m. Ils sont avantageusement disposés à une distance de 0,4 m. Les caractéristiques du générateur de gaz mis en oeuvre sont préférentiellement celles indiquées dans le tableau ci-dessous.

| | |
|---|---|
| Chargement primaire | Double base 1133, masse 5g |
| Chargement secondaire | 0 |

Afin d'améliorer la protection des occupants du véhicule, le système automatisé peut également activer un ou plusieurs amortisseur placé(s) entre l'un au moins des pare-chocs avant et/ou arrière du véhicule 50 et une partie fixe de ce dernier pour réduire les vitesses d'impact. Plus particulièrement, le système automatisé permet d'activer les vérins qui rendent opérationnel(s) le ou les amortisseurs de chocs. Les pare-chocs du véhicule sont ainsi déplacés axialement par rapport à leur emplacement initial, avantageusement de l'ordre de 30 à 50 cm et un absorbeur de choc les relie à une partie fixe avant et arrière du véhicule. Le système automatisé ajuste la raideur de l'absorbeur pour qu'à l'impact la sévérité du choc soit inférieure celle d'un choc à 60km/h contre un obstacle fixe. Pour réduire la vitesse d'un véhicule de 120Km/h à 60Km/h sur 40cm, la décélération est du même ordre que celle qui est nécessaire pour réduire la vitesse du passager de 60Km/h à l'arrêt. Ainsi, grâce au système automatisé, l'anticipation de l'accident permet une meilleure protection des personnes. De même, les chocs arrière violents provoquent le "coup du lapin" pour les passagers en position frontale. Le but de l'amortisseur arrière est de réduire la vitesse d'impact. Le système automatisé aura à prendre en compte la situation réelle dans et hors véhicule. Leur activation sera limitée aux cas de sévérité exceptionnelle d'accident. Les charges pyrotechniques nécessaires à la mise en place des absorbeurs sont proches de celle des prétensionneurs (0,5 à 3g).

### Générateur de gaz

Le générateur de gaz est configuré pour générer un gaz sur une durée telle que la durée totale de gonflement de la structure gonflable est supérieure à 50 millisecondes.

La réalisation d'un gonflement sur une telle durée peut être obtenue via un générateur à double chambre comprenant respectivement une charge dite primaire et une charge dite secondaire, comme par exemple le générateur de gaz décrit dans la demande WO01/89885. Ainsi, et avantageusement, la charge primaire est constituée de propergol homogène ou composite, et la charge secondaire est constituée par mélange oxydo-réducteur tel que du Nitrate d'Ammonium/Nitrate de Guanidine. La durée de génération de gaz est de 0,05 à 2,5s, le volume gazeux est d'une fraction de mole à 4 moles, et la température de gaz dans le générateur comprise entre 1500K et 600K. Les durées et volumes ne sont bien entendu pas limités pas à ces seules valeurs citées.

Avantageusement, le propergol composite est du type Butalane, avec une charge oxydante constitué de Perchlorate d'Ammonium ou d'ADN (Ammonium DiNitramide), et le Nitrate d'Ammonium de la charge secondaire est remplacé en tout ou partie par de l'ADN.

A titre d'exemple, pour le gonflage d'une structure gonflable de 60 litres destinée à la protection du conducteur (structure constituée d'un seul sac), la charge primaire est un propergol Double base 1133, la chambre d'évacuation est en aval des deux autres chambres. La surface du trou central de la grille ou plaque est répartie en périphérie. Un exemple de composition de charge et de caractéristiques du générateur est donné dans les tableaux ci-dessous.

| | |
|---|---|
| Chargement primaire | Double base 1133, masse 3g |
| Chargement secondaire | Mélange 11g NA+4g NiGu |

| | Chambre primaire | Chambre secondaire | Tank de 60 litres sous Azote | | |
|---|---|---|---|---|---|
| | Pmax MPA | Pmax MPA | Pmax MPA | TFP ms | Tps à Pmax ms |
| +20 | 7,0 | 3,0 | 0,15 | | 300 |

Pour le gonflage d'une structure gonflable de 110 litres destinée à la protection, il est avantageusement prévu un générateur comprenant des caractéristiques et une composition de charges indiquées dans les tableaux ci-dessous.

| | |
|---|---|
| Chargement primaire | Double base 1133 masse 8g |
| Chargement secondaire | Mélange 18 NA + 4g NiGu |

| | Chambre primaire | Chambre secondaire | Tank de 60 litres sous Azote | | |
|---|---|---|---|---|---|
| | Pmoy MPA | Pmoy MPA | Pmax MPA | TFP ms | Tps à Pmax ms |
| +20 | 5,0 | 2,6 | 0,4 | | 295 |

Qu'il s'agisse d'une structure gonflable de 60 ou 110 litres, le matériau est choisi est un matériau se dilatant peu sous l'effet de la pression. Il peut s'agir par exemple de Nylon. La structure gonflable étant étanche, il est avantageusement prévu un évent pour réguler la déflation du sac lors de décélération de l'occupant et ainsi absorber l'énergie cinétique de l'occupant. Cet évent est soit operculé pour ne s'ouvrir qu'à une pression prédéterminée soit pilotée par le système automatisé (système d'amélioration de la sécurité passive). Cette régulation de l'évent piloté est particulièrement pertinente lorsque le véhicule utilise ses absorbeurs de chocs pour réduire la vitesse d'impact, l'occupant bénéficie de la décélération correspondante, pour ensuite utiliser la déflation du sac lorsque le véhicule est immobilisé.

Les sacs 2 Nylon peuvent être remplacés par des structures gonflables en PVC du type canot pneumatique de Zodiac^{®}. Un exemple de composition de charges et de caractéristiques du générateur pour le gonflage d'une structure gonflable de 60 litres est donné dans les tableaux qui suivent.

| Chargement primaire | Double base 1133 masse 6,45g |
|---|---|
| Initiateur | DB |
| Charge relais | 0,40g BNP. |
| X distance tuyère -grille | 30 mm |
| Diamètre tuyère | 2,6mm |
| Chargement secondaire | Mélange 14 NA + 2,6 g NiGu |

| | Ch. primaire | Ch. secondaire | Tank de 60 litres sous Azote | | |
|---|---|---|---|---|---|
| | Pmoy MPA | Pmoy MPA | Pmax MPA | TFP ms | Tps à Pmax ms |
| +20 | 5,5 | 2,4 | 0,33 | Non Significatif | 295 |

La génération de gaz sur une durée supérieure à 50 millisecondes peut être également obtenue via des charges secondaires seules. Dans ce cas, la chambre contenant la charge primaire est remplacée par un dispositif énergisant tel que décrit dans la demande WO2010103231. Ce type de dispositif est particulièrement intéressant lorsque la charge secondaire est de faible masse ou que le générateur est dans une zone du véhicule 50 particulièrement sollicité thermiquement. A titre d'exemple, l'alimentation impulsionnelle est basée sur la charge sous 250 Volt d'un banc de condensateur de 50mF. Elle génère une onde de courant de quelques ms avec une valeur crête de 5000 Ampère. Un second banc de condensateur permet une seconde impulsion après un délai souhaité. Ajoutons que ce dispositif permet de réguler dans le temps la génération de gaz.

Avec un tel générateur, et pour le gonflage d'une structure gonflable de 60 litres destinée à la protection du conducteur (structure constituée d'un seul sac), la charge secondaire est constituée de 18g de Riegel. L'alimentation impulsionnelle est basée sur la charge sous 250 Volt d'un banc de condensateur de 50mF (milli Farad). Elle génère une onde de courant de quelques ms avec une valeur crête de 5 000 Ampère. Un second banc de condensateur permet une seconde impulsion après un délai souhaité. Le sac est soit du type Nylon 4.4 soit du type PVC tel que décrit précédemment.

La génération de gaz sur une durée supérieure à 50 millisecondes peut être également obtenue via des sacs 2 étanches avec des charges primaires seules, en particulier pour les charges inférieures à 3g.

La génération de gaz peut être aussi obtenue complètement ou partiellement avec des gaz comprimés.

Il peut être prévu également des générateurs de gaz pour vérins dédiés au prétensionneurs de ceintures de sécurité ou pour l'activation d'amortisseurs avant/arrière.

Un exemple de générateur pour vérins destiné à être mis en oeuvre pour activer les prétensionneurs de ceintures de sécurité ou les amortisseurs avant/arrière est un générateur à deux chambres présentant les caractéristiques suivantes.

| | |
|---|---|
| Chargement primaire | Double base 1133 masse 0,20g |
| Chargement secondaire | Nitrate d'Ammonium 0,30g |
| Durée de fonctionnement | 100-250ms |

Le générateur selon cet exemple se présente comme un initiateur contenant le grain de 1133 ou de propergol composite et d'un petit boitier hermétique à l'extérieur de ce premier composant contenant le NA en prills broyés ou non. Enfin les deux composants sont assemblés dans la culasse du prétensionneur. Selon les besoins la charge totale peut être portée à 1,2g ou plus.

Un autre exemple de générateur pouvant être mis en oeuvre pour l'ensemble des besoins cités plus haut est un générateur à une chambre primaire seule chargée en propergol homogène ou composite.

Avantageusement, la charge oxydante du propergol composite est principalement constituée d'ADN (Ammonium DiNitramide).

Un autre exemple de générateur pouvant être mis en oeuvre pour l'ensemble des besoins cités plus haut est un générateur ayant seulement une chambre secondaire dans laquelle la charge secondaire, unique, est constituée d'une charge oxydante et réductrice. Cette dernière est activée par un dispositif énergisant.

Avantageusement, la charge oxydante contient principalement de l'ADN (Ammonium DiNitramide).

Les exemples précédemment décrits sont présentés en lien avec une voiture. Il est bien entendu évident que le système de protection selon l'invention ne se limite pas à une mise en oeuvre avec des voitures. Il peut en effet être appliqué à tout autre véhicule et composants mobiles. En particulier il peut être prévu d'équiper des camions, tramways circulant sur les voies publiques d'un système de protection piéton/vélo tel que décrit précédemment. De même, il peut être prévu des motos équipées d'un système d'aide à la conduite qui va définir et mettre en place un système de protection adapté à la situation donnée. A cet effet, il sera prévu une structure gonflable soit portée directement par le conducteur soit ménagée au niveau du guidon de la moto. Il pourra être prévu également une structure gonflable enveloppante du type coquille portée par le motard lui-même en cas éjection de ce dernier lors de l'impact.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Système de protection pour véhicule ou composant mobile comprenant :
- des équipements de protection équipant le véhicule (50) ou composant mobile, comprenant au moins une structure gonflable (1, 10, 100, 110) de sécurité étanche associée à au moins un générateur de gaz activable par une commande extérieure et
- un système automatisé chargé des fonctions critiques de sécurité d'un véhicule (50) ou composant mobile ou composant mobile, ladite commande extérieure comprenant un signal électrique provenant du système automatisé, et correspondant à une information prédictive d'un choc le système automatisé étant configuré pour piloter l'activation dans le temps de la structure gonflable seule ou en combinaison avec d'autres équipements de protection du véhicule ou composant mobile en fonction d'informations reçues avant et pendant le choc,
**caractérisé en ce que** le générateur de gaz est configuré pour générer un gaz sur une durée telle que la durée totale de gonflement de la structure gonflable est supérieure à 50 millisecondes et **en ce que** la structure gonflable (1, 10, 100, 110) comprend des sacs assemblés entre eux et en communication fluidique les uns avec les autres par des évents régulés.

2. Système de protection selon la revendication 1 **caractérisé en ce que** l'un au moins des évents est régulé par la pression ou électroniquement par le système automatisé régulant la déflation de la structure.

3. Système de protection selon la revendication 1 ou la revendication 2, **caractérisé en ce que** la structure gonflable (1, 10, 100, 110) est constituée d'au moins une série de sacs (2) prenant une forme tubulaire en position déployée, lesdits sacs (2) étant assemblés latéralement les uns avec les autres.

4. Système de protection selon l'un quelconque des revendications 1 à 3, **caractérisé en ce que** les sacs (2) sont assemblés selon une génératrice.

5. Système de protection selon la revendication 4, **caractérisé en ce que** la distance entre les sacs (2) est inférieure au diamètre desdits sacs (2).

6. Système de protection selon l'une quelconque des revendications précédentes, **caractérisé en ce que** la structure gonflable (1, 10, 100, 110) est constituée d'au moins une série de sacs (2) réalisés à partir de deux toiles et soudés selon une génératrice.

7. Système de protection selon l'une quelconque des revendications précédentes, **caractérisé en ce que** la structure gonflable (1, 10, 100, 110) comporte en outre un sac de renfort prenant une forme tubulaire en position déployée, s'étendant transversalement à la série de sacs tubulaires au niveau de l'une des extrémités dudit ensemble.

8. Système de protection selon la revendication 7, **caractérisé en ce que** le sac de renfort est prolongé latéralement de long de la structure gonflable (1, 10, 100, 110).

9. Système de protection selon l'une quelconque des revendications précédentes, **caractérisé en ce que** la structure gonflable (1, 10, 100, 110) comporte un sac de protection additionnel prenant une forme tubulaire en position déployée et s'étendant transversalement à la série de sacs tubulaires au niveau de l'autre extrémité dudit ensemble.

10. Système de protection selon la revendication 9, **caractérisé en ce que** le sac de protection additionnel a une épaisseur anisotrope.

11. Système de protection selon l'une quelconque des revendications précédentes, **caractérisé en ce que** la structure gonflable (1, 10, 100, 110) comporte un sac de protection additionnel prenant une forme tubulaire en position déployée et s'étendant transversalement à la série de sacs tubulaires au niveau du générateur de gaz dans son module.

12. Système de protection selon l'une quelconque des revendications précédentes , **caractérisé en ce que** le sac de renfort (3) et/ou le sac de protection additionnel est(sont) en communication fluidique avec l'un au moins des sacs tubulaires de la série de sacs, la communication fluidique étant assurée le cas échéant par des évents régulés par le système automatisé.

13. Système de protection selon l'une quelconque des revendications précédentes, **caractérisé en ce que** les sacs sont logés dans une matrice en tissus assurant la forme de la structure gonflable.

14. Système de protection selon l'une quelconque des revendications précédentes, **caractérisé en ce que** tout ou partie des sacs ont une épaisseur anisotrope selon une génératrice.

15. Système de protection selon l'une quelconque des revendications précédentes, **caractérisé en ce que** la structure gonflable (1, 10, 100, 110) et le générateur de gaz sont conditionnés dans un module placé dans une partie avant du véhicule (50) et sont arrangés pour que structure gonflable se déploie partiellement vers l'avant du véhicule (50) pour éviter un contact directe de la personne avec le véhicule (50, 100, 110).

16. Système de protection selon la revendication 15, **caractérisé en ce que** le module placé dans une partie avant du véhicule (50) est placé sur un dispositif articulé qui permet au le système automatisé de modifier son orientation, son assiette, et sa position axiale.

17. Système de protection selon l'une quelconque des revendications précédentes, **caractérisé en ce que** le système automatisé est configuré pour que, en cas de prédiction d'un choc avec une personne extérieure au véhicule, active la pressurisation de la structure gonflable (1, 10, 100, 110) et du ou des différents évents pour ajuster les caractéristiques de la structure gonflable (1, 10, 100, 110) aux caractéristiques du choc.

18. Système de protection selon l'une quelconque des revendications précédentes, **caractérisé en ce que** la structure gonflable (1, 10, 100, 110) est constituée de deux séries de sacs (2) prenant une forme tubulaire en forme d'arc de cercle en position déployée, les sacs (2) de chaque série étant assemblés latéralement et en communication fluidique les uns avec les autres, chaque série de sacs (2) étant intégrés de part et d'autre d'un siège et/ou d'un appui tête du véhicule (50) et comprenant des moyens d'attache réciproques (6).

19. Système de protection selon l'une quelconque des revendications précédentes, **caractérisé en ce que** la structure gonflable (1, 10, 100, 110) est constituée d'une série de sacs dont les extrémités sont fixées sur le tableau de bord à une distance inférieure à sa longueur pour une protection conducteur ou passager en cas de choc frontal.

20. Système de protection selon l'une quelconque des revendications précédentes, **caractérisé en ce que** les équipements de protection comprennent une structure gonflable additionnelle constituée d'un seul sac et au moins d'un évent régulé pour une protection du conducteur ou du passager en cas de choc frontal.

21. Système de protection selon l'une quelconque des revendications précédentes, **caractérisé en ce que** la ou les structure(s) gonflable(s) (1, 10, 100, 110) est(sont) réalisée(s) en caoutchouc naturel ou de synthèse, Nylon 6X6 enduit Néoprène ou Silicone, Polyuréthane.

22. Système de protection selon l'une quelconque des revendications précédentes, **caractérisé en ce qu'**il comporte au moins un absorbeur de choc mis en oeuvre par un vérin et placé entre l'un au moins des pare-chocs du véhicule (50) et une partie fixe du véhicule (50), le vérin étant piloté par le système automatisé.

23. Système de protection selon l'une quelconque des revendications précédentes, **caractérisé en ce qu'**il comporte au moins un absorbeur de choc dont la force d'absorption est piloté par le système automatisé.

24. Système de protection selon l'une quelconque des revendications précédentes, **caractérisé en ce qu'**il comporte au moins un prétensionneur de ceinture de sécurité apte à être actionné par le système automatisé et activé sur une durée supérieure à 50 millisecondes.

25. Système de protection selon l'une quelconque des revendications précédentes, **caractérisé en ce que** le système de protection comprend un système de blocage de sangles en partie haute des sièges couplé à des absorbeurs d'énergie dont les caractéristiques peuvent être ajustées en fonction de la morphologie du passager installé sur le siège et identifiée par le système automatisé.

26. Système de protection selon l'une quelconque des revendications précédentes, **caractérisé en ce que** le système automatisé est configuré pour sélectionner une ou plusieurs structures gonflables (1, 10, 100, 110) et piloter le ou les évents équipant la ou lesdites structures, l'un au moins des absorbeurs de choc et/ou l'un au moins des prétensionneurs de ceinture de sécurité en fonction de l'information prédictive établie.

27. Système de protection selon l'une quelconque des revendications précédentes, caractérisé les différents systèmes d'activation sont reliés par un système Bus qui en outre les vérifie en temps réel.

28. Système de protection selon l'une quelconque des revendications précédentes, **caractérisé en ce que** le générateur de gaz comporte une première chambre contenant du propergol solide homogène ou composite, et une deuxième chambre contenant une deuxième composition constituée par un mélange d'au moins une charge oxydante et d'au moins une charge réductrice, ledit propergol solide formant un bloc dont l'épaisseur et les caractéristiques chimiques sont ajustés pour assurer une combustion complète en plus de 50 millisecondes.

29. Système de protection selon la revendication précédente, **caractérisé en ce que** le propergol composite a une charge oxydante principalement constituée d'Ammonium DiNitramide, et **en ce que** la charge oxydante de la deuxième composition est principalement constituée d'ADN.

30. Système de protection selon l'une quelconque des revendications 1 à 29, **caractérisé en ce que** le générateur de gaz comporte comme seule composition de propergol homogène ou composite dont les caractéristiques balistiques sont ajustées pour assurer une combustion complète en plus de 50 millisecondes.

31. Système de protection selon la revendication précédente, **caractérisé en ce que** le propergol composite a une charge oxydante principalement constituée d'Ammonium DiNitramide,

32. Système de protection selon l'une quelconque des revendications 1 à 29, **caractérisé en ce que** le générateur de gaz comporte une seule composition constituée par un mélange d'au moins une charge oxydante et d'au moins une charge réductrice, dont la décomposition est pilotée par un dispositif énergisant configuré pour assurer une génération complète des gaz en plus de 50 millisecondes.

33. Système de protection selon la revendication précédente, **caractérisé en ce que** la charge oxydante est principalement constituée d'Ammonium DiNitramide.

34. Système de protection selon l'une quelconque des revendications précédentes, **caractérisé en ce qu'**il comporte des moyens de génération de gaz comprimés pouvant être utilisés seuls ou en complément du générateur de gaz.

35. Système de protection selon l'une quelconque des revendications précédentes, **caractérisé en ce qu'**il est configuré pour générer un gaz sur une durée telle que la durée totale de gonflement de la structure gonflable est supérieure à 100 millisecondes.

## Patentansprüche

1. Schutzsystem für ein Fahrzeug oder eine mobile Komponente, umfassend:
- Schutzausrüstungen, mit denen das Fahrzeug (50) oder die mobile Komponente ausgerüstet ist, umfassend mindestens eine luftdichte aufblasbare Sicherheitsstruktur (1, 10, 100, 110), die mindestens einem Gasgenerator zugeordnet ist, der durch eine externe Steuerung aktivierbar ist, und
- ein automatisiertes System, das für kritische Sicherheitsfunktionen eines Fahrzeugs (50) oder einer mobilen Komponente oder einer mobilen Komponente zuständig ist, wobei die externe Steuerung ein elektrisches Signal umfasst, das vom automatisierten System kommt und Informationen entspricht, die einen Aufprall vorhersagen, wobei das automatisierte System dafür konfiguriert ist, die zeitliche Aktivierung der aufblasbaren Struktur allein oder in Kombination mit anderen Schutzausrüstungen des Fahrzeugs oder der mobilen Komponente in Abhängigkeit von vor und während des Aufpralls erhaltenen Informationen zu steuern,
**dadurch gekennzeichnet, dass** der Gasgenerator dafür konfiguriert ist, über eine derartige Dauer ein Gas zu erzeugen, dass die Gesamtdauer des Aufblasens der aufblasbaren Struktur mehr als 50 Millisekunden beträgt, und dass die aufblasbare Struktur (1, 10, 100, 110) zusammengefügte Beutel umfasst, die untereinander über geregelte Entlüftungsöffnungen in Fluidverbindung stehen.

2. Schutzsystem nach Anspruch 1, **dadurch gekennzeichnet, dass** die mindestens eine Entlüftungsöffnung durch Druck oder elektronisch durch das automatisierte System, das Gasablassen aus der Struktur regelt, geregelt wird.

3. Schutzsystem nach Anspruch 1 oder Anspruch 2,
**dadurch gekennzeichnet, dass** die aufblasbare Struktur (1, 10, 100, 110) aus mindestens einer Reihe von Beuteln (2) besteht, die in der entfalteten Position eine röhrenförmige Form annehmen, wobei die Beutel (2) seitlich zusammengefügt sind.

4. Schutzsystem nach einem der Ansprüche 1 bis 3,
**dadurch gekennzeichnet, dass** die Beutel (2) entlang einer Generatrix zusammengefügt sind.

5. Schutzsystem nach Anspruch 4, **dadurch gekennzeichnet, dass** der Abstand zwischen den Beuteln (2) kleiner als der Durchmesser der Beutel (2) ist.

6. Schutzsystem nach einem der vorhergehenden Ansprüche,
**dadurch gekennzeichnet, dass** die aufblasbare Struktur (1, 10, 100, 110) aus mindestens einer Reihe von Beuteln (2), die aus zwei Stoffen gefertigt und entlang einer Generatrix verschweißt sind, besteht.

7. Schutzsystem nach einem der vorhergehenden Ansprüche,
**dadurch gekennzeichnet, dass** die aufblasbare Struktur (1, 10, 100, 110) ferner einen Verstärkungsbeutel umfasst, der in der entfalteten Position eine röhrenförmige Form annimmt und sich an einem der Enden der Anordnung quer zu der Reihe von röhrenförmigen Beuteln erstreckt.

8. Schutzsystem nach Anspruch 7, **dadurch gekennzeichnet, dass** der Verstärkungsbeutel seitlich entlang der aufblasbaren Struktur (1, 10, 100, 110) verlängert ist.

9. Schutzsystem nach einem der vorhergehenden Ansprüche,
**dadurch gekennzeichnet, dass** die aufblasbare Struktur (1, 10, 100, 110) einen zusätzlichen Schutzbeutel umfasst, der in der entfalteten Position eine röhrenförmige Form annimmt und sich am anderen Ende der Anordnung quer zu der Reihe von röhrenförmigen Beuteln erstreckt.

10. Schutzsystem nach Anspruch 9, **dadurch gekennzeichnet, dass** der zusätzliche Schutzbeutel eine anisotrope Dicke aufweist.

11. Schutzsystem nach einem der vorhergehenden Ansprüche,
**dadurch gekennzeichnet, dass** die aufblasbare Struktur (1, 10, 100, 110) einen zusätzlichen Schutzbeutel umfasst, der in der entfalteten Position eine röhrenförmige Form annimmt und sich am Gasgenerator in seinem Modul quer zur Reihe von röhrenförmigen Beuteln erstreckt.

12. Schutzsystem nach einem der vorhergehenden Ansprüche,
**dadurch gekennzeichnet, dass** der Verstärkungsbeutel (3) und/oder der zusätzliche Schutzbeutel mit mindestens einem der röhrenförmigen Beutel der Reihe von Beuteln in Fluidverbindung steht (stehen), wobei die Fluidverbindung gegebenenfalls durch von dem automatisierten System geregelte Entlüftungsöffnungen gewährleistet wird.

13. Schutzsystem nach einem der vorhergehenden Ansprüche,
**dadurch gekennzeichnet, dass** sich die Beutel in einer Stoffmatrix befinden, die für die Form der aufblasbaren Struktur sorgt.

14. Schutzsystem nach einem der vorhergehenden Ansprüche,
**dadurch gekennzeichnet, dass** alle oder ein Teil der Beutel entlang einer Generatrix eine anisotrope Dicke aufweisen.

15. Schutzsystem nach einem der vorhergehenden Ansprüche,
**dadurch gekennzeichnet, dass** die aufblasbare Struktur (1, 10, 100, 110) und der Gasgenerator in einem Modul verpackt sind, das in einem vorderen Teil des Fahrzeugs (50) platziert ist, und so angeordnet sind, dass sich die aufblasbare Struktur teilweise in Richtung der Vorderseite des Fahrzeugs (50) entfaltet, um einen direkten Kontakt der Person mit dem Fahrzeug (50, 100, 110) zu vermeiden.

16. Schutzsystem nach Anspruch 15, **dadurch gekennzeichnet, dass** das in einem vorderen Teil des Fahrzeugs (50) platzierte Modul auf einer Gelenkvorrichtung platziert ist, die es dem automatisierten System ermöglicht, seine Ausrichtung, seinen Sitz und seine axiale Position zu ändern.

17. Schutzsystem nach einem der vorhergehenden Ansprüche,
**dadurch gekennzeichnet, dass** das automatisierte System dafür konfiguriert ist, dass sich im Falle der Vorhersage eines Aufpralls mit einer Person außerhalb des Fahrzeugs die Druckregulierung der aufblasbaren Struktur (1, 10, 100, 110) und des oder der verschiedenen Entlüftungsöffnungen aktiviert, um die Eigenschaften der aufblasbaren Struktur (1, 10, 100, 110) an die Eigenschaften des Aufpralls anzupassen.

18. Schutzsystem nach einem der vorhergehenden Ansprüche,
**dadurch gekennzeichnet, dass** die aufblasbare Struktur (1, 10, 100, 110) aus zwei Reihen von Beuteln (2) besteht, die in der entfalteten Position eine röhrenförmige Form in Form eines Kreisbogens annehmen, wobei die Beutel (2) jeder Reihe seitlich zusammengefügt sind und miteinander in Fluidverbindung stehen, wobei jede Reihe von Beuteln (2) auf beiden Seiten eines Sitzes und/oder einer Kopfstütze des Fahrzeugs (50) integriert ist und gegenseitige Befestigungsmittel (6) umfasst.

19. Schutzsystem nach einem der vorhergehenden Ansprüche,
**dadurch gekennzeichnet, dass** die aufblasbare Struktur (1, 10, 100, 110) aus einer Reihe von Beuteln besteht, deren Enden zum Schutz des Fahrers oder Beifahrers im Falle eines Frontalaufpralls in einem Abstand kleiner als ihre Länge am Armaturenbrett befestigt sind.

20. Schutzsystem nach einem der vorhergehenden Ansprüche,
**dadurch gekennzeichnet, dass** die Schutzausrüstungen zum Schutz des Fahrers oder Beifahrers im Falle eines Frontalaufpralls eine zusätzliche aufblasbare Struktur umfassen, die aus einem einzelnen Beutel und mindestens einer geregelten Entlüftungsöffnung besteht.

21. Schutzsystem nach einem der vorhergehenden Ansprüche,
**dadurch gekennzeichnet, dass** die aufblasbare(n) Struktur(en) (1, 10, 100, 110) aus natürlichem oder synthetischem Gummi, Nylon 6X6, beschichtet mit Neopren oder Silikon, Polyurethan besteht (bestehen).

22. Schutzsystem nach einem der vorhergehenden Ansprüche,
**dadurch gekennzeichnet, dass** es mindestens einen Stoßdämpfer umfasst, der durch einen Zylinder realisiert und zwischen mindestens einer der Stoßstangen des Fahrzeugs (50) und einem festen Teil des Fahrzeugs (50) angeordnet ist, wobei der Zylinder durch das automatisierte System gesteuert wird.

23. Schutzsystem nach einem der vorhergehenden Ansprüche,
**dadurch gekennzeichnet, dass** es mindestens einen Stoßdämpfer umfasst, dessen Absorptionskraft durch das automatisierte System gesteuert wird.

24. Schutzsystem nach einem der vorhergehenden Ansprüche,
**dadurch gekennzeichnet, dass** es mindestens einen Gurtstraffer umfasst, der dazu ausgelegt ist, vom automatisierten System betätigt und für eine Dauer von mehr als 50 Millisekunden aktiviert zu werden.

25. Schutzsystem nach einem der vorhergehenden Ansprüche,
**dadurch gekennzeichnet, dass** das Schutzsystem ein Gurtverriegelungssystem im oberen Teil der Sitze umfasst, das mit Energieabsorbern gekoppelt ist, deren Eigenschaften abhängig von der Morphologie des auf dem Sitz sitzenden und vom automatisierten System identifizierten Passagiers angepasst werden können.

26. Schutzsystem nach einem der vorhergehenden Ansprüche,
**dadurch gekennzeichnet, dass** das automatisierte System dafür konfiguriert ist, eine oder mehrere aufblasbare Strukturen (1, 10, 100, 110) auszuwählen und die Entlüftungsöffnung(en), mit der (denen) die Struktur(en) ausgerüstet ist (sind), den mindestens einen der Stoßdämpfer und/oder den mindestens einen der Gurtstraffer abhängig von den ermittelten Vorhersageinformationen zu steuern.

27. Schutzsystem nach einem der vorhergehenden Ansprüche,
**dadurch gekennzeichnet, dass** die verschiedenen Aktivierungssysteme über ein Bussystem verbunden sind, das sie ferner in Echtzeit prüft.

28. Schutzsystem nach einem der vorhergehenden Ansprüche,
**dadurch gekennzeichnet, dass** der Gasgenerator eine erste Kammer, die einen homogenen oder zusammengesetzten Festtreibstoff enthält, und eine zweite Kammer, die eine zweite Zusammensetzung enthält, die aus einer Mischung aus mindestens einer oxidierenden Ladung und mindestens einer reduzierenden Ladung besteht, umfasst, wobei der Festtreibstoff einen Block bildet, dessen Dicke und chemische Eigenschaften so eingestellt sind, dass eine vollständige Verbrennung in mehr als 50 Millisekunden gewährleistet ist.

29. Schutzsystem nach dem vorhergehenden Anspruch,
**dadurch gekennzeichnet, dass** der zusammengesetzte Treibstoff eine oxidierende Ladung aufweist, die hauptsächlich aus Ammoniumdinitramid besteht, und dass die oxidierende Ladung der zweiten Zusammensetzung hauptsächlich aus ADN besteht.

30. Schutzsystem nach einem der Ansprüche 1 bis 29,
**dadurch gekennzeichnet, dass** der Gasgenerator als einzige Zusammensetzung einen homogenen oder zusammengesetzten Treibstoff aufweist, dessen ballistische Eigenschaften so angepasst sind, dass eine vollständige Verbrennung in mehr als 50 Millisekunden gewährleistet ist.

31. Schutzsystem nach dem vorhergehenden Anspruch,
**dadurch gekennzeichnet, dass** der zusammengesetzte Treibstoff eine oxidierende Ladung aufweist, die hauptsächlich aus Ammoniumdinitramid besteht.

32. Schutzsystem nach einem der Ansprüche 1 bis 29,
**dadurch gekennzeichnet, dass** der Gasgenerator eine einzige Zusammensetzung aufweist, die aus einer Mischung aus mindestens einer oxidierenden Ladung und mindestens einer reduzierenden Ladung besteht, deren Zersetzung durch eine Energieversorgungsvorrichtung gesteuert wird, die dafür konfiguriert ist, eine vollständige Erzeugung von Gasen in mehr als 50 Millisekunden zu gewährleisten.

33. Schutzsystem nach dem vorhergehenden Anspruch,
**dadurch gekennzeichnet, dass** die oxidierende Ladung hauptsächlich aus Ammoniumdinitramid besteht.

34. Schutzsystem nach einem der vorhergehenden Ansprüche,
**dadurch gekennzeichnet, dass** es Mittel zur Erzeugung komprimierter Gase aufweist, die allein oder zusätzlich zum Gasgenerator verwendet werden können.

35. Schutzsystem nach einem der vorhergehenden Ansprüche,
**dadurch gekennzeichnet, dass** es dafür konfiguriert ist, über eine derartige Dauer ein Gas zu erzeugen, dass die Gesamtdauer des Aufblasens der aufblasbaren Struktur mehr als 100 Millisekunden beträgt.

## Claims

1. The protection system for vehicle or mobile component, comprising:
- protective equipment fitted to the vehicle (50) or mobile component, comprising at least one inflatable sealed safety structure (1, 10, 100, 110) associated with at least one gas generator that can be activated by an external command, and
- an automated system responsible for the safety-critical functions of a vehicle (50) or mobile component, said external command comprising an electrical signal from the automated system, and corresponding to information predictive of an impact, the automated system being configured to control the activation over time of the inflatable structure alone or in combination with other protective equipment of the vehicle or mobile component on the basis of information received before and during the impact,
**characterized in that** the gas generator is configured to generate a gas over a time such that the total inflation time of the inflatable structure is greater than 50 milliseconds, and **in that** the inflatable structure (1, 10, 100, 110) comprises bags assembled together and in fluid communication with one another via regulated vents.

2. The protection system according to claim 1, **characterized in that** at least one of the vents is regulated by pressure or electronically by the automated system regulating the deflation of the structure.

3. The protection system according to claim 1 or claim 2,
**characterized in that** the inflatable structure (1, 10, 100, 110) is made up of at least one series of bags (2) assuming a tubular shape in the deployed position, said bags (2) being assembled laterally with one another.

4. The protection system according to any one of claims 1 to 3, **characterized in that** the bags (2) are assembled along a generatrix.

5. The protection system according to claim 4, **characterized in that** the distance between the bags (2) is less than the diameter of said bags (2).

6. The protection system according to any of the preceding claims, **characterized in that** the inflatable structure (1, 10, 100, 110) is made up of at least one series of bags (2) made from two sheets and welded along a generatrix.

7. The protection system according to any one of the preceding claims, **characterized in that** the inflatable structure (1, 10, 100, 110) further comprises a reinforcing bag assuming a tubular shape in the deployed position, extending transversely to the series of tubular bags at one of the ends of said assembly.

8. The protection system according to claim 7, **characterized in that** the reinforcing bag is extended laterally along the inflatable structure (1, 10, 100, 110).

9. The protection system according to any one of the preceding claims, **characterized in that** the inflatable structure (1, 10, 100, 110) further comprises an additional protection bag assuming a tubular shape in the deployed position, extending transversely to the series of tubular bags at the other end of said assembly.

10. The protection system according to claim 9, **characterized in that** the additional protection bag has an anisotropic thickness.

11. The protection system according to any one of the preceding claims, **characterized in that** the inflatable structure (1, 10, 100, 110) further comprises an additional protection bag assuming a tubular shape in the deployed position, extending transversely to the series of tubular bags at the gas generator in its module.

12. The protection system according to any of the preceding claims, **characterized in that** the reinforcing bag (3) and/or the additional protection bag is/are in fluid communication with at least one of the tubular bags of the series of bags, the fluid communication being ensured if necessary by vents regulated by the automated system.

13. The protection system according to any one of the preceding claims, **characterized in that** the bags are housed in a fabric matrix ensuring the shape of the inflatable structure.

14. The protection system according to any of the preceding claims, **characterized in that** all or some of the bags have an anisotropic thickness along a generatrix.

15. The protection system according to any of the preceding claims, **characterized in that** the inflatable structure (1, 10, 100, 110) and the gas generator are packaged in a module located in a front part of the vehicle (50) and are arranged so that the inflatable structure deploys partially towards the front of the vehicle (50) to avoid direct contact between the person and the vehicle (50, 100, 110).

16. The protection system according to claim 15, **characterized in that** the module located in a front part of the vehicle (50) is placed on an articulated device which allows the automated system to modify its orientation, trim and axial position.

17. The protection system according to any of the preceding claims, **characterized in that** the automated system is configured to, in the event of a predicted impact with a person from outside the vehicle, activate the pressurization of the inflatable structure (1, 10, 100, 110) and of the various vents in order to adjust the characteristics of the inflatable structure (1, 10, 100, 110) to the characteristics of the impact.

18. The protection system according to any one of the preceding claims, **characterized in that** the inflatable structure (1, 10, 100, 110) consists of two series of bags (2) assuming a tubular shape in the form of an arc of a circle in the deployed position, the bags (2) of each series being assembled laterally and in fluid communication with one another, each series of bags (2) being integrated on either side of a vehicle seat and/or headrest (50) and comprising reciprocal attachment means (6).

19. The protection system according to any one of the preceding claims, **characterized in that** the inflatable structure (1, 10, 100, 110) consists of a series of bags whose ends are attached to the dashboard at a distance less than its length for driver or passenger protection in the event of a frontal impact.

20. The protection system according to any of the preceding claims, **characterized in that** the protection equipment comprises an additional inflatable structure consisting of a single bag and at least one regulated vent for driver or passenger protection in the event of a frontal impact.

21. The protection system according to any one of the preceding claims, **characterized in that** the inflatable structure(s) (1, 10, 100, 110) is/are made of natural or synthetic rubber, Nylon 6X6 coated with Neoprene or Silicone, Polyurethane.

22. The protection system according to any of the preceding claims, **characterized in that** it comprises at least one shock absorber implemented by a jack and placed between at least one of the vehicle bumpers (50) and a fixed part of the vehicle (50), the jack being controlled by the automated system.

23. The protection system according to any of the preceding claims, **characterized in that** it comprises at least one shock absorber whose absorption force is controlled by the automated system.

24. The protection system according to any one of the preceding claims, **characterized in that** it comprises at least one seatbelt pretensioner capable of being actuated by the automated system and activated over a period of more than 50 milliseconds.

25. The protection system according to any of the preceding claims, **characterized in that** the protection system comprises a system for locking straps at the top of the seats coupled with energy absorbers whose characteristics can be adjusted according to the morphology of the passenger installed on the seat and identified by the automated system.

26. The protection system according to any one of the preceding claims, **characterized in that** the automated system is configured to select one or more inflatable structures (1, 10, 100, 110) and control the vent(s) fitted to said structure(s), at least one of the impact absorbers and/or at least one of the seatbelt pretensioners on the basis of the predictive information established.

27. The protection system according to any of the preceding claims, **characterized in that** the various activation systems are linked by a bus system which also checks them in real time.

28. The protection system according to any of the preceding claims, **characterized in that** the gas generator comprises a first chamber containing homogeneous or composite solid propellant, and a second chamber containing a second composition consisting of a mixture of at least one oxidation charge and at least one reduction charge, said solid propellant forming a block whose thickness and chemical characteristics are adjusted to ensure complete combustion in more than 50 milliseconds.

29. The protection system according to the preceding claim, **characterized in that** the composite propellant has an oxidation charge consisting mainly of Ammonium DiNitramide, and **in that** the oxidation charge of the second composition consists mainly of ADN.

30. The protection system according to any one of claims 1 to 29, **characterized in that** the gas generator comprises a single homogeneous or composite propellant composition whose ballistic characteristics are adjusted to ensure complete combustion in more than 50 milliseconds.

31. The protection system according to the preceding claim, **characterized in that** the composite propellant has an oxidation charge consisting mainly of Ammonium DiNitramide,

32. The protection system according to any one of claims 1 to 29, **characterized in that** the gas generator comprises a single composition consisting of a mixture of at least one oxidation charge and at least one reduction charge, the breakdown of which is controlled by an energizing device configured to ensure complete gas generation in more than 50 milliseconds.

33. The protection system according to the preceding claim, **characterized in that** the oxidation charge consists mainly of Ammonium DiNitramide.

34. The protection system according to any of the preceding claims, **characterized in that** it comprises compressed gas generation means which can be used alone or in addition to the gas generator.

35. The protection system according to any of the preceding claims, **characterized in that** it is configured to generate a gas over a period such that the total inflation time of the inflatable structure is greater than 100 milliseconds.
